**Europäisches Patentamt**

**European Patent Office**

**Office européen des brevets**

(19)

(11) Veröffentlichungsnummer: **0 376 351**
**A2**

(12) # EUROPÄISCHE PATENTANMELDUNG

(21) Anmeldenummer: **89124146.5**

(22) Anmeldetag: **29.12.89**

(51) Int. Cl.⁵: **B61D 17/02, B62D 35/00**

(30) Priorität: **30.12.88 CS 9058/88**

(43) Veröffentlichungstag der Anmeldung:
**04.07.90 Patentblatt 90/27**

(84) Benannte Vertragsstaaten:
**CH DE ES FR GB LI SE**

(71) Anmelder: **SKODA koncernovy podnik**
**No 57 Tylova**
**Plzen(CS)**

(72) Erfinder: **Brezina, Josef**
**Pivovarská 986**
**Rokycany(CS)**

(74) Vertreter: **Patentanwälte Beetz sen. - Beetz**
**jun. Timpe - Siegfried - Schmitt-Fumian-**
**Mayr**
**Steinsdorfstrasse 10**
**D-8000 München 22(DE)**

(54) **Einrichtung zur Verminderung des Luftwiderstands von Fahrzeugen.**

(57) Die Erfindung betrifft eine Einrichtung zur Verminderung des Luftwiderstands und zur Dämpfung der Aufprallkräfte des Fahrzeugs. Erfindungsgemäß ist am Vorder-und/oder Hinterteil des Fahrzeugs 2 eine Stirnplatte 1 verstellbar angeordnet, die mit schürzen- bzw. keilförmigen Seitenwänden verbunden ist. Die Stirnplatte und/oder die Seitenwände sind mit der Karosserie des Fahrzeugs durch mehrere verschiebbar und schwingend angeordnete Befestigungen 3, 4 verbunden, von denen mindestens eine zu einem Antriebs- bzw. Dämpfungsmechanismus 4 gehört.

Fig. 1

EP 0 376 351 A2

# Einrichtung zur Verminderung des Luftwiderstands von Fahrzeugen

Die Erfindung betrifft eine Einrichtung zur Verminderung des Luftwiderstands von Fahrzeugen, besonders von Schienenfahrzeugen.

Bei der aerodynamischen Formgebung von Schienenfahrzeugen ergibt sich das Problem, daß die einzelnen Einheiten, wie Triebwagen und auch Waggons, in beiden Richtungen mit gleich hohen Geschwindigkeiten fahren. Wenn z.B. Lokomotiven, die häufig an jedem Ende einen Fahrerstand mit großflächigen Fenstern besitzen, an jeder Stirnseite mit einer festen aerodynamiscnen Verkleidung ausgerüstet werden, wird zwar der Strömungswiderstand am Vorderende vermindert, es entstehen jedoch am hinteren Ende zwischen der aerodynamisch geformten Rückwand der Lokomotive und dem ersten Waggon intensive Turbulenzen und Wirbel, die den Luftwiderstand erhöhen und Leistungsverluste verursachen. Eine längsverschiebbare Verkleidung zur Überdeckung dieses Raumes zwischen der Rückseite der Lokomotive und dem ersten Waggon ist unbefriedigend, weil an jeder Stirnseite eine solche Überdeckung und eine aerodynamische Verkleidung für Vorwärtsfahrt vorgesehen werden müßte, was einen hohen technischen und finanziellen Aufwand bedeutet. Ferner ergeben sich bei solchen Überdeckungen Probleme beim Anschließen verschiedener Waggontypen.

Ferner ist eine aerodynamisch geformte Stirnwand für Triebwagen und Lokomotiven bekannt, die vom Lokführer je nach Fahrtrichtung um 180° verdreht werden kann, und zwar um einen in der Längsachse der Lokomotive angeordneten Bolzen. Diese Konstruktion ist jedoch außerordentlich aufwendig und hat keinen Eingang in die Praxis gefunden.

Bekannte Einrichtungen zur Dämpfung der Aufprallkräfte von Straßenfahrzeugen sind regelmäßig als Karosserieteile ausgebildet, die sich bei geringen Stoßkräften reversierbar und bei höheren Aufprallkräften dauerhaft verformen. Bei Schienenfahrzeugen sind elastische Stoßdämpfer allgemein bekannt, die z. B. Stahlfedern, Gummipuffer oder Druckmitteldämpfer enthalten. Der Nachteil dieser Dämpfer liegt darin, daß die Dämpfungsstrecke verhältnismäßig kurz ist und daher größere Aufprallkräfte nicht aufgefangen werden können.

Aufgabe der Erfindung ist es, eine Einrichtung zur Verminderung des Luftwiderstands, insbesondere von Schienenfahrzeugen, zu schaffen, die bei einfacher und betriebssicherer Konstruktion an beiden Fahrzeugenden und in jeder Fahrtrichtung wirksam ist und die auch größere Stöße wirksam dämpfen kann.

Diese Aufgabe wird bei einer Einrichtung zur Verminderung des aerodynamischen Widerstands und zur Dämpfung der Anprallkräfte des Fahrzeuges gemäß der Erfindung dadurch gelöst, daß an dem Vorder- und/oder dem Hinterteil des Fahrzeuges eine Platte abgestützt ist, welche mit keilförmigen Seitenwänden versehen ist, wobei die Platte und/oder die Seitenwände mit der Karosserie des Fahrzeugs durch mindestens drei verschiebbar und schwingend angeordnete Befestigungen verbunden sind, von denen mindestens eine mit einem Verschiebungs-Antriebsmechanismus und/oder mit einem Dämpfungsmechanismus versehen ist.

Der Antriebsmechanismus kann einen Zahntrieb, einen Schraubentrieb, einen hydraulischen oder einen pneumatischen Zylinder enthalten. Zur Verminderung von dauerhaften Deformationen der Einrichtung bei einer Kollision ist die Einrichtung vorteilhaft mit einem Sicherungsglied und einem Arretierglied versehen, welches Einrichtung in den Endstellungen sichert. In manchen Fällen ist vorteilhaft, die Platte und die keilförmigen Seitenwände aus zwei gegeneinander verschiebbaren Teilen auszubilden. Die teleskopische Anordnung ermöglicht es, die Platte am Oberteil der Karosserie aufzufangen und so die ganze Stirnfläche der Karosserie durch die Platte zu bedecken.

Der Hauptvorteil der erfindungsgemäßen Einrichtung liegt darin, daß mit der erfindungsgemäßen Einrichtung der Vorder- und/oder Hinterteil des Fahrzeuges je nach Bedarf aerodynamisch gestaltet werden kann und dadurch den Energieverbrauch des Fahrzeuges herabsetzt. Ein weiterer Vorteil der Einrichtung liegt darin, daß sie bei einer Kollision des Fahrzeuges die Aufprallkräfte wirksam abdämpft. Da die Einrichtung an der vorderen Stirnseite im Niveau der Puffer weit vorsteht, können auch die bevorzugt in diesem Bereich angreifenden großen Aufprallkräfte ohne dauerhafte Deformationen der Einrichtung progressiv abgedämpft werden.

Weitere Besonderheiten und Vorzüge sind bei den im folgenden beschriebenen und in der Zeichnung verwirklichten Ausführungsbeispielen verwirklicht. Es zeigen:

Fig. 1 den Vorderteil eines Schienenfahrzeugs mit der Einrichtung in schematischer Seitenansicht;

Fig. 2 die Einrichtung in der Betriebsstellung mit hydraulischem Verschiebe-Antrieb und/oder Dämpfungsmechanismus;

Fig. 3 die Einrichtung in der zurückgezogenen Stellung oder nach der Abdämpfung des Aufpralls.

Am Vorderteil einer Fahrzeug-Karosserie 2 ist eine Stirnplatte 1 angelenkt, die mit zwei keilförmigen Seitenwänden 11 verbunden ist. Jede Seitenwand weist im Oberteil eine parallel zur schrägen Stirnplatte 1 verlaufende Nut 3 auf, in die ein an der Karosserie befestigter Querzapfen 3a eingreift. Unterhalb dieser zwei Befestigungen 3, 3a ist mindestens eine weitere Befestigung ausgebildet, welche ebenfalls durch einen Querbolzen 3b und eine Nut 3c in der jeweiligen Seitenwand 11 gebildet ist. Auf diesem Querbolzen 3b ist ein Antriebsritzel 4a angebracht, das mit einer Zahnstange 4b kämmt. Das Antriebsritzel 4a und die Zahnstange 4b bilden einen Verschiebeantrieb 4.

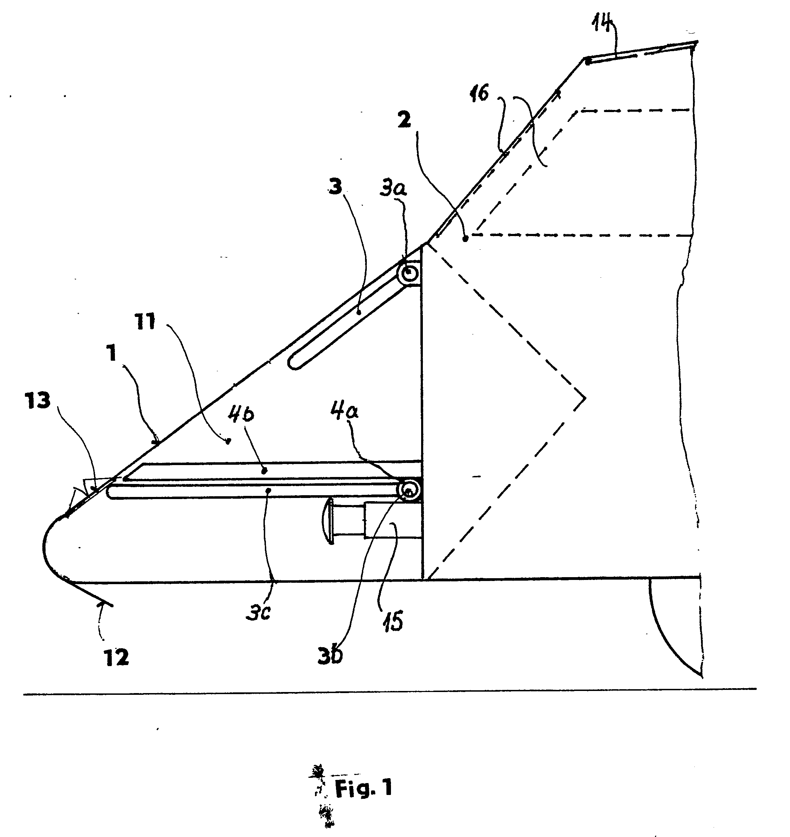

Am Vorderteil des keilförmigen Körpers 1, 11, ist eine Klappe 13 ausgebildet, die in der zurückgezogenen Stellung der Stirnplatte 1 den Durchgang der Puffer 15 ermöglicht, die am Fahrzeugrahmen stirnseitig angeordnet sind. Die Stirnplatte 1 und die in Fig. 1 teilweise gestrichelt dargestellten keilförmigen Seitenwände 11 sind in ihren Verbindungen bogenförmig ausgeformt und bestehen im Bereich der Fenster 16 der Karosserie 2 aus einem durchsichtigen Material. Am unteren Vorderteil des keilförmigen Körpers 1 ist ein Spoiler 12 ausgebildet. Im eingezogenen Zustand kann der Raum zwischen den keil förmigen Zwischenwänden 11 und der Karosserie 2 durch eine Klappe 14 oder dgl. abgedeckt werden, die am unteren oder oberen Teil der Karosserie 2, an der Platte 1 oder an den keilförmigen Seitenwänden 11 angeordnet sein kann.

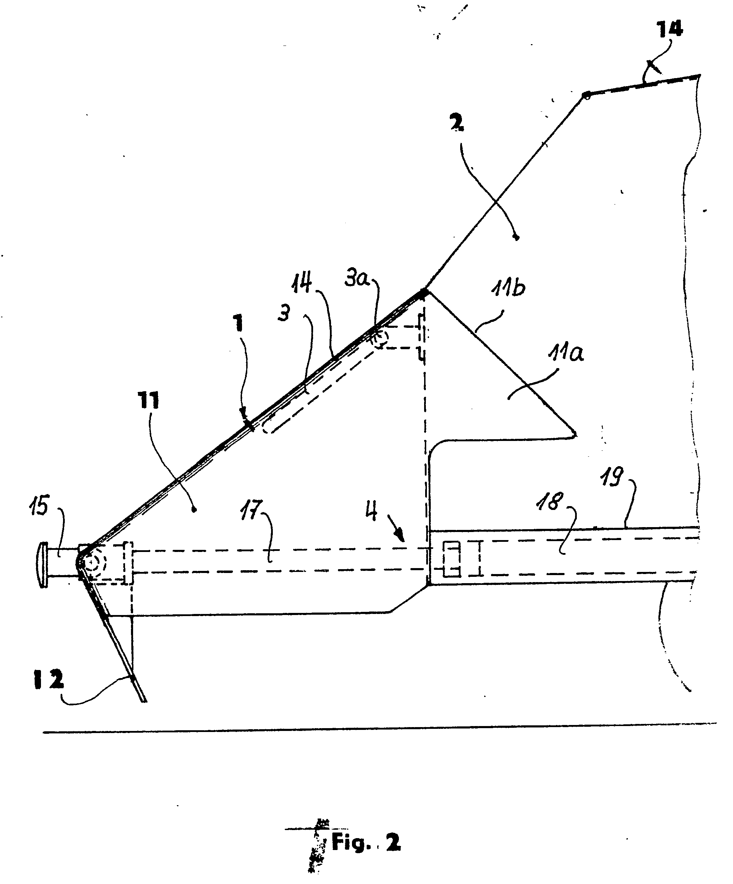

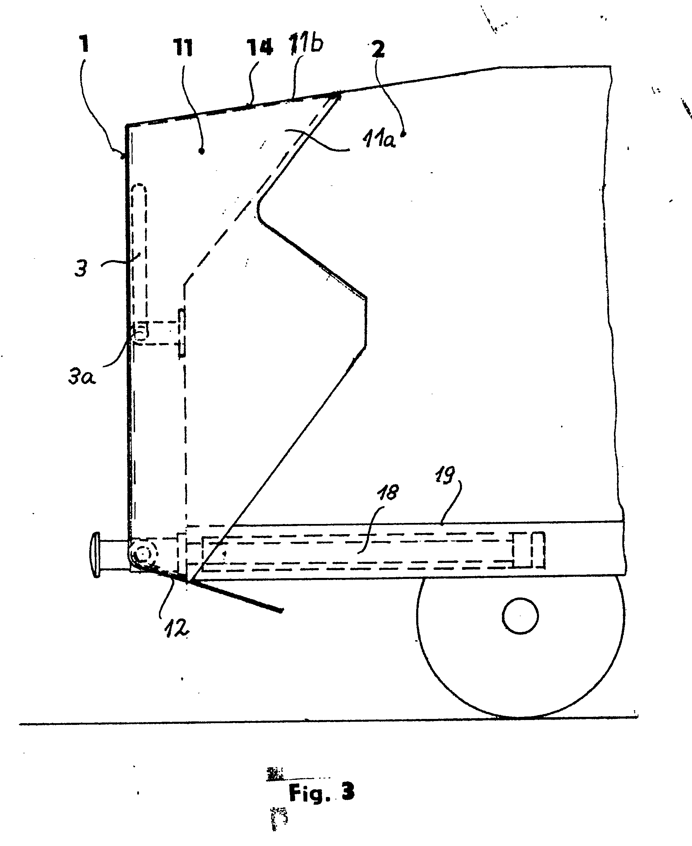

Bei der Einrichtung nach den Fig. 2 und 3 sind die mit der Ausführung nach Fig. 1 funktionsgleichen Bauteile mit gleichen Bezugszeichen gekennzeichnet. Die Querbolzen 3a sind an vorkragenden Böcken 3d am oberen Endbereich der vertikalen Stirnwand der Karosserie 2 befestigt. Wie bei der Ausführung nach Fig. 1 verläuft die Stirnplatte 1 etwa in der Schräge der Vorderfenster 16 bis zum Niveau der Puffer 15, die am Vorderende je einer Kolbenstange 17 montiert sind. Die Kolbenstange 17 bildet zusammen mit einem am Fahrzeugrahmen 19 befestigten Druckmittel Zylinder 18 den Verstell- bzw. Verschiebeantrieb 4, mit dem der aus der Stirnplatte 1, den Seitenwänden 11 und dem Spoiler 12 gebildete keilförmige Körper zusammen mit den Puffern 15 aus der ausgefahrenen Stellung nach Fig. 2 in die zurückgefahrene bzw. eingezogene Position nach Fig. 3 verstellt werden kann. Bei dieser Ausführung bilden die Kolben-Zylinder-Einheiten 18 Stoßdämpfungselemente. Jede schürzenförmige Seitenwand 11 weist einen etwa dreieckigen hinteren Ansatz 11a auf, dessen in Fig. 2 rückwärtige Oberkante 11b in der eingezogenen Stellung nach Fig. 3 sich etwa in Verlängerung der vorderen Dachschräge der Karosserie 2 erstreckt.

Vor der Fahrt in einer festgelegten Richtung wird der Verschiebeantrieb betätigt, der den keilförmigen Körper 1, 11 an der Vorderseite des Fahrzeugs in die Stellung nach Fig. 1, 2 vorschiebt, so daß ein erodynamisch günstiger Vorbau entsteht. Die rückwärtige Einrichtung am hinteren Fahrzeugende verbleibt in ihrer eingezogenen Stellung nach Fig. 3 und überdeckt einen großen Teil des Zwischenraumes zwischen dem Triebwagen und dem folgenden Waggon, was eine wesentliche Verminderung des Strömungswiderstands in auch diesem Bereich ergibt.

Die Einrichtung gemäß der Erfindung kann nicht nur bei Schienenfahrzeugen, sondern auch bei Straßenfahrzeugen angewendet werden, wobei dann ihre Dämpfungseigenschaften im Vordergrund stehen. Die Einrichtung kann an Fahrzeuge nachträglich angebaut werden.

## Ansprüche

1. Einrichtung zur Verminderung des Luftwiderstands eines Fahrzeugs, insbesondere eines Schienenfahrzeugs, **dadurch gekennzeichnet,** daß am Vorder- und/oder Hinterteil des Fahrzeugs (2) eine mit schürzenförmigen Seitenwänden (11) verbundene Stirnplatte (1) verstellbar am Fahrzeugende angelenkt ist und über einen Antriebsmechanismus (4) aus einer eingezogenen in eine ausgefahrene Betriebsstellung bewegbar ist.

2. Einrichtung nach Anspruch 1, **dadurch gekennzeichnet,** daß der Antriebsmechanismus (4) einen Zahnstangentrieb (4a, 4b) oder einen Schraubspindeltrieb enthält.

3. Einrichtung nach Anspruch 1, **dadurch gekennzeichnet,** daß der Antriebsmechanismus (4) mindestens einen Druckmittel-Zylinder enthält, der auch als Stoßdämpfer wirksam ist.

4. Einrichtung nach Anspruch 1 und 2, **dadurch gekennzeichnet,** daß der Antriebsmechanismus (4) bzw. der keilförmige Körper (1, 11) mit einem Sicherungs- und/oder Arretierglied versehen ist.

5. Einrichtung nach Anspruch 1, **dadurch gekennzeichnet,** daß die Stirnplatte (1) und die keilförmigen Seitenwände (11) aus zwei gegeneinander verschiebbar angeordneten Teilen bestehen.

6. Einrichtung nach Anspruch 1 bis 5, **dadurch gekennzeichnet,** daß in der Stirnplatte (1) verstellbare Klappen (13) ausgebildet sind, welche mit den am Fahrzeug (2) montierten Bauteilen, wie Puffer und Kupplungen, lagemäßig korrespondieren.

7. Einrichtung nach Anspruch 1 bis 6, **dadurch gekennzeichnet,** daß die Stirnplatte (1) und die Seitenwände (11) insbesondere im Bereich der Fahrzeugfenster und der Beleuchtungen aus einem durchsichtigen Material bestehen.

8. Einrichtung nach Anspruch 1 bis 7,
**dadurch gekennzeichnet,**
daß der Unter- und/oder der Oberteil der Stirnplatte (1) mit einem Spoiler (12) versehen ist.

**Fig. 1**

Fig. 2

Fig. 3